Europäisches Patentamt

**European Patent Office**

Office européen des brevets

(19)

(11) **EP 1 421 129 B1**

(12) **EUROPÄISCHE PATENTSCHRIFT**

(45) Veröffentlichungstag und Bekanntmachung des Hinweises auf die Patenterteilung:
**15.06.2005   Patentblatt 2005/24**

(51) Int Cl.7: **C08G 18/10**, C08G 18/12, C08G 18/61, C08G 18/71

(21) Anmeldenummer: 02754781.9

(22) Anmeldetag: **27.06.2002**

(86) Internationale Anmeldenummer:
**PCT/EP2002/007127**

(87) Internationale Veröffentlichungsnummer:
**WO 2003/018658 (06.03.2003 Gazette 2003/10)**

(54) **EINKOMPONENTIGE ALKOXYSILANTERMINIERTE POLYMERE ENTHALTENDE SCHNELL HÄRTENDE ABMISCHUNGEN**

RAPID-CURE, ONE-COMPONENT MIXTURES, WHICH CONTAIN ALKOXYSILANE-TERMINATED POLYMERS

MELANGES A UN COMPOSANT CONTENANT DES POLYMERES A TERMINAISON ALCOXYSILANE ET DURCISSANT RAPIDEMENT

(84) Benannte Vertragsstaaten:
**BE DE FR GB NL**

(30) Priorität: **28.08.2001   DE 10142050**

(43) Veröffentlichungstag der Anmeldung:
**26.05.2004   Patentblatt 2004/22**

(73) Patentinhaber: **Consortium für elektrochemische Industrie GmbH**
**81379 München (DE)**

(72) Erfinder:
• **SCHINDLER, Wolfram**
**82008 Unterhaching (DE)**
• **STANJEK, Volker**
**81479 München (DE)**
• **PACHALY, Bernd**
**84561 Mehring-Öd (DE)**

(74) Vertreter: **Fritz, Helmut, Dr.**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**US-A- 3 895 043         US-A- 5 399 607**

• **PATENT ABSTRACTS OF JAPAN vol. 018, no. 616 (M-1710), 24. November 1994 (1994-11-24) & JP 06 238817 A (NISSHIN STEEL CO LTD), 30. August 1994 (1994-08-30)**
• **PATENT ABSTRACTS OF JAPAN vol. 2000, no. 04, 31. August 2000 (2000-08-31) & JP 2000 017042 A (GE TOSHIBA SILICONES CO LTD), 18. Januar 2000 (2000-01-18)**

**Beschreibung**

Die Erfindung betrifft einkomponentige Abmischungen mit alkoxysilanterminierten Polymeren, welche bei Raumtemperatur eine hohe Härtungsgeschwindigkeit zeigen und deren Verwendung.

Polymersysteme, die über reaktive Alkoxysilylgruppen verfügen, sind seit langem bekannt. In Gegenwart von Luftfeuchtigkeit sind diese alkoxysilantermierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US 3,971,751 und DE 198 49 817, als auch um Polymere, deren Rückgrat ganz oder zumindest zum Teil aus Organosiloxanen besteht, beschrieben u. a. in WO 96/34030 und US 5,254,657).

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen (Viskosität, Schmelzpunkt, Löslichkeiten etc.) als auch die Eigenschaften der fertig vernetzten Massen (Härte, Elastizität, Zugfestigkeit, Reißdehnung, Hitzebeständigkeit etc.) nahezu beliebig einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen und im medizinischen Bereich, z.B. für Abformmassen im Dentalbereich verwenden. Diese Produkte lassen sich in jeder Form applizieren, wie z.B. streichen, sprühen, gießen, pressen, spachteln etc.

Nachteilig an allen bekannten alkoxysilanterminierten Polymersystemen ist allerdings deren nur mäßige Reaktivität gegenüber Feuchtigkeit, sowohl in Form von Luftfeuchtigkeit als auch in Form von - gegebenenfalls zugesetztem - Wasser. Um auch bei Raumtemperatur eine hinreichende Härtungsgeschwindigkeit zu erreichen, ist daher der Zusatz eines Katalysators unbedingt erforderlich. Das ist vor allem deshalb problematisch, da die in der Regel als Katalysatoren eingesetzten zinnorganischen Verbindungen toxikologisch bedenklich sind. Zudem enthalten die Zinnkatalysatoren oftmals auch noch Spuren hochtoxischer Tributylzinnderivate.

Besonders problematisch ist die relativ geringe Reaktivität der alkoxysilanterminierten Polymersysteme, wenn keine Methoxysilyl-Terminierungen sondern die nochmals unreaktiveren Ethoxysilyl-Terminierungen verwendet werden. Gerade ethoxysilylterminierte Polymere wären jedoch in vielen Fällen besonders vorteilhaft, weil bei ihrer Aushärtung lediglich Ethanol als Spaltprodukt freigesetzt wird.

Um dieses Problem zu umgehen, wurde bereits nach zinnfreien Katalysatoren gesucht. Denkbar sind hier vor allem titanhaltige Katalysatoren, z.B. Titantetraisopropoxylat oder Bis-(acetylacetonato)-diisobutyttitanat (beschrieben u.a. in EP 0 885 933). Allerdings besitzen diese Titankatalysatoren den Nachteil, nicht gemeinsam mit zahlreichen stickstoffhaltigen Verbindungen eingesetzt werden zu können, da letztere hier als Katalysatorgifte wirken. Die Verwendung dieser stickstoffhaltigen Verbindungen, z.B. als Haftvermittler, wäre in vielen Fällen jedoch wünschenswert.

Von großem Vorteil wären daher alkoxysilanterminierte Polymersysteme, die von sich aus eine so hohe Reaktivität aufweisen, daß der Gehalt an zinnhaltigen Katalysatoren stark reduziert werden kann. Von besonderem Vorteil wäre es dabei, wenn man ganz auf Zinn sowie sonstige schwermetallhaltige Katalysatoren verzichten könnte.

Gegenstand der Erfindung sind Polymerabmischungen, die alkoxysilanterminierte Polymere (A) mit Endgruppen der allgemeinen Formel (1)

$$-A-CH_2-SiR^1{}_a(OR^2)_{3-a} \qquad (1)$$

und gegebenenfalls Zinnkatalysatoren mit einem Zinngehalt von höchstens 100 ppm bezogen auf die Polymerabmischung enthalten, wobei

| | |
|---|---|
| **A** | eine zweibindige Bindegruppe -O-CO-NH- |
| **R**$^1$ | einen gegebenenfalls halogensubstuierten Alkyl-, Cycloalkyl-, Alkenyl- oder Arylrest mit 1-10 Kohlenstoffatomen, |
| **R**$^2$ | einen Alkylrest mit 1-6 Kohlenstoffatomen oder einen ω-Oxaalkyl-alkylrest mit insgesamt 2-10 Kohlenstoffatoment |
| **a** | eine ganze Zahl von 0 bis 2 bedeuten, |

wobei schäumbare Mischungen ausgenommen sind, welche isocyanatfreie, alkoxysilanterminierte Präpolymere, welche über Silanterminierungen der allgemeinen Formel [2],

$$-X-CO-Y-CH_2-SiR^{\alpha}{}_w(OR^{\beta})_{3-w} \qquad [2]$$

verfügen, in der

| | |
|---|---|
| **X** und **Y** | ein Sauerstoffatom, eine N-R$^\gamma$-Gruppe oder ein Schwefelatom, |
| **R**$^\alpha$ | einen Alkyl-, Alkenyl- oder Arylrest mit 1-10 Kohlenstoffatomen, |

**R^β**      einen Alkylrest mit 1-2 Kohlenstoffatomen oder einen ω-Oxaalkyl-alkylrest mit insgesamt 2-10 Kohlenstoffatomen,

**R^γ**      ein Wasserstoffatom, einen Alkyl-, Cycloalkyl-, Alkenyl- oder Arylrest mit 1-10 Kohlenstoffatomen oder eine $CH_2$-$SiR^α_w(OR^β)_{3-w}$-Gruppe und,

**w**      die Werte 0 oder 1 bedeuten,

mit der Maßgabe, daß mindestens eine der beiden Gruppen X oder Y eine NH-Funktion darstellt, und Treibmittel enthalten.

Die Polymere (A) zeichnen sich dadurch aus, daß sie Alkoxysilylgruppen enthalten, die nur durch einen Methylspacer von einem elektronegativen Heteroatom mit mindestens einem freien Elektronenpaar getrennt sind. Dadurch besitzen diese Polymere eine extrem hohe Reaktivität gegenüber Feuchtigkeit, so daß sie zu Polymerabmischungen verarbeitet werden können, die auch mit wenig oder sogar ohne Zinnkatalysator, bevorzugt ohne Zinn- oder Titankatalysator, besonders bevorzugt ganz ohne schwermetallhaltigen Katalysator bei Raumtemperatur mit hinreichend kurzen Klebfreizeiten bzw. mit hinreichend hoher Härtungsgeschwindigkeit aushärten.

Als Reste $R^1$ werden Methyl-, Ethyl- oder Phenylgruppen bevorzugt. Bei den Resten $R^2$ handelt es sich bevorzugt um Methyl- oder Ethylgruppen und als Reste $R^3$ werden Wasserstoff, Alkylreste mit 1-4 Kohlenstoffatomen, Cyclohexyl- und Phenylreste bevorzugt.

Weil bei den alkoxysilylterminierten Polymeren (A) A eine Gruppe -O-CO-NH- bedeutet, weisen diese Polymere besonders niedrige Viskositäten auf. Dies ist bei vielen Anwendungen von Vorteil.

Die Hauptketten der alkoxysilanterminierten Polymere (A) können verzweigt oder unverzweigt sein. Die mittleren Kettenlängen können beliebig entsprechend der jeweils gewünschten Eigenschaften sowohl der unvernetzten Mischung als auch der ausgehärteten Masse angepaßt werden. Sie können aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Polyacrylate und -methacrylate, Polycarbonate, Polystyrole, Polyamide, Polyvinylester oder Polyolefine wie z.B. Polyethylen, Polybutadien, Ethylen-Olefincopolymere oder Styrol-Butadiencopolymere. Selbstverständlich können auch beliebige Mischungen oder Kombinationen aus Polymeren mit verschiedenen Hauptketten eingesetzt werden.

Zur Herstellung von Polymeren (A) mit Silanterminierungen der allgemeinen Formel (1) sind eine Vielzahl von Möglichkeiten bekannt, insbesondere:

- Copolymerisationen unter Beteiligung von ungesättigten Monomeren, die über Gruppen der allgemeinen Formel (1) verfügen. Beispiele für derartige Monomere wären (Meth-) Acryloyloxymethyl-trimethoxysilan, (Meth-)Acryloyloxymethyl-methyldimethoxysilan oder auch die entsprechenden Ethoxysilylverbindungen.

- Polyadditionen von Oxiranderivaten in Gegenwart von epoxyfunktionellen Monomeren, die über Gruppen der allgemeinen Formel (1) verfügen. Beispiele für derartige Monomere wären Glycidoxymethyl-trimethoxysilan, Glycidoxymethyl-methyldimethoxysilan oder auch die entsprechende Ethoxysilylverbindungen. Selbstverständlich können diese Silanmonomere auch auf geeignete OH-terminierte Prepolymere aufgepfropft werden.

- Aufpfropfung von ungesättigten Monomeren, die über Gruppen der allgemeinen Formel (1) verfügen auf Thermoplaste wie Polyethylen. Beispiele für derartige Monomere wären (Meth-) Acryloyloxymethyl-trimethoxysilan, (Meth-)Acryloyloxymethyl-methyldimethoxysilan oder auch die entsprechenden Ethoxysilylverbindungen.

- Umsetzung eines Präpolymeren (A1) mit einem oder mehreren Organosilanen (A2) der allgemeinen Formel (3)

$$C\text{-}B\text{-}CH_2\text{-}SiR^1_a(OR^2)_{3-a} \qquad (3)$$

in der $R^1$, $R^2$, $R^3$ und a die oben genannten Bedeutungen aufweisen,

**B**      ein Sauerstoff-, Stickstoff- oder Schwefelatom bedeutet und

**C-B-**      eine funktionelle Gruppe darstellt, die reaktionsfähig ist gegenüber geeigneten funktionellen Gruppen des Präpolymeren (A1).

Ist dabei das Präpolymer (A1) selbst aus mehreren Bausteinen (A11, A12 ...) zusammengesetzt, so ist es nicht unbedingt erforderlich, daß aus diesen Bausteinen (A11, A12 ...) zunächst das Präpolymer (A1) hergestellt wird, welches anschließend mit dem Silan (A2) zum fertigen Polymer (A) umgesetzt wird. So ist hier auch eine Umkehrung der Reaktionsschritte möglich, bei dem einer oder mehrere Bausteine (A11, A12 ...) zunächst mit dem Silan (A2) umgesetzt werden, und die dabei erhaltenen Verbindungen erst anschließend mit den verbleibenden Bausteinen (A11, A12 ...) zum fertigen Polymer (A) umgesetzt werden. Beispiele für Prepolymere (A1) bestehend aus Bausteinen A11, A12 sind OH-, NH- oder NCO-terminierte Polyurethane und Polyharnstoffe, welche sich aus Polyisocyanaten (Baustein A11) sowie Polyolen (Baustein A12) herstellen lassen.

Bei einer bevorzugten Herstellungsweise der Polymere (A) wird vorzugsweise ein Silan (A2) der allgemeinen Formel (5) eingesetzt.

$$OCN\text{-}CH_2\text{-}SiR^1_a(OR^2)_{3-a} \qquad (5)$$

wobei

$R^1$, $R^2$ und a die oben angegebenen Bedeutungen besitzen.

Beim Einsatz von Silan der allgemeinen Formel (5) wird dieses bevorzugt mit einem isocyanatreaktiven Präpolymer (A1), d.h. einem Präpolymer (A1) mit OH- Funktionen, umgesetzt oder aber mit einem entsprechend terminierten Precursor (A11) des Präpolymers. Letzterer wird dann in weiteren Reaktionsschritten zu dem fertigen Polymer (A) umgesetzt. Der Einsatz von Silan der allgemeinen Formel (5) ist bevorzugt, da die so erhaltenen alkoxysilylterminierten Polymeren (A) besonders niedrige Viskositäten aufweisen, insbesondere beim Einsatz von Präpolymer (A1) mit OH-Funktionen.
Bevorzugte Bausteine (A11, A12 ...) zur Herstellung der Polymere (A) sind neben den Silanen (A2) der allgemeinen Formel (5) OH-terminierte Polyole, monomere Alkohole/Amine mit mindestens 2 OH/NH-Funktionen und/oder hydroxyalkyl- oder aminoalkylterminierte Polydiorganosiloxane sowie Di- oder Polyisocyanate.

Bei der Herstellung des Polymeren (A) sind die Konzentrationen aller an sämtlichen Reaktionsschritten beteiligter Isocyanatgruppen und aller isocyanatreaktiver Gruppen sowie die Reaktionsbedingungen bevorzugt so gewählt, daß im Laufe der Polymersynthese sämtliche Isocyanatgruppen abreagieren. Das fertige Polymer (A) ist somit bevorzugt isocyanatfrei.

Als Polyole für die Herstellung der Polymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit zwei oder mehr OH-Funktionen eingesetzt werden.

Als hydroxyalkyl- oder aminoalkylterminierte Polysiloxane werden bevorzugt Verbindungen der allgemeinen Formel (6)

$$Z\text{-}R^6\text{-}[Si(R^5)_2\text{-}O\text{-}]_n\text{-}Si(R^5)_2\text{-}R^6\text{-}Z \qquad (6)$$

eingesetzt, in der

$R^5$ einen Kohlenwasserstoffrest mit 1 bis 12 Kohlenstoffatomen, bevorzugt Methylreste,

$R^6$ eine verzweigte oder unverzweigte Kohlenwasserstoffkette mit 1-12 Kohlenstoffatomen, bevorzugt Trimethylen und

$n$ eine Zahl von 1 bis 3000, bevorzugt eine Zahl von 10 bis 1000 bedeuten und

$Z$ die vorstehenden Bedeutungen aufweist.

Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder Biuret-triisocyanate.

Die Polymere (A) in den erfindungsgemäßen Polymerabmischungen sind bereits bei Raumtemperatur gegenüber Feuchtigkeit so reaktiv, daß sie mit sehr hoher Geschwindigkeit aushärten. Mit methoxysilanterminierten Polymeren (A), bei denen $R^2$ einen Methylrest bedeutet, sind sogar zinnfreie Systeme mit Klebfreizeiten von unter einer Minuten möglich.

Bevorzugt sind die erfindungsgemäßen Polymerabmischungen frei von zinnhaltigen Katalysatoren, insbesondere organischen Zinnverbindungen, wobei die Abwesenheit von titanhaltigen Katalysatoren ebenfalls bevorzugt wird. Besonders bevorzugt sind die erfindungsgemäßen Polymerabmischungen frei von jeglichen schwermetallhaltigen Katalysatoren. Unter Katalysatoren sind in diesem Zusammenhang Verbindungen zu verstehen, die in der Lage sind, die Aushärtung der Polymerabmischung zu katalysieren. Insbesondere handelt es sich dabei um organische Schwermetallverbindungen. Als Schwermetalle gelten in diesem Zusammenhang alle Metalle außer den Leichtmetallen, d.h. den Alkali- und Erdkalimetallen sowie Aluminium und Scandium. Katalytisch nicht wirksames sowie toxikologisch und ökologisch unbedenkliches Titandioxid kann als Füllstoff oder Pigment auch diesen bevorzugten Polymerabmischungen zugesetzt werden.

Vorzugsweise können in den Polymerabmischungen organische Aminoverbindungen als basische Katalysatoren eingesetzt werden. Beispiele sind Aminopropyltrimethoxysilan, Aminomethyltrimethoxysilan, Aminomethyl-methyldimethoxysilan, N-(2-Aminoethyl)-aminopropyltrimethoxysilan, Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, N-Ethylmorpholinin etc. Diese Katalysatoren werden bevorzugt in Konzentrationen von 0,01-10 Gew.-% eingesetzt. Die verschiedenen Katalysatoren können sowohl in reiner Form als auch als Mischungen verschiedener Katalysatoren eingesetzt werden. Bevorzugt als Katalysatoren sind Verbindungen der allgemeinen Formel (7),

$$Z\text{-}R^4\text{-}SiR^1_a(OR^2)_{3-a} \qquad (7)$$

wobei

Z        eine NHR$^3$-Gruppe und

R$^4$       einen verzweigten oder unverzweigte Kohlenwasserstoffrest mit 1-10 Kohlenstoffatomen gegebenenfalls unterbrochen von Sauerstoff oder N(R$^3$)-Gruppen bedeuten und

R$^1$, R$^2$, R$^3$    und a die vorstehend angegebenen Bedeutungen besitzen.

Bei Bedarf können die beschriebenen Katalysatoren ganz oder auch nur zum Teil bereits während der Synthese der Polymeren (A) zugesetzt werden.

Bei Verwendung von Zinnkatalysatoren in den Polymerabmischungen, die alkoxysilanterminierte Polymere (A) enthalten, reichen bereits geringste Mengen mit einem Zinngehalt von höchstens 100 ppm, bevorzugt höchstens 50 ppm und besonders bevorzugt höchsten 10 ppm aus.

Von besonderem Vorteil ist, daß sich auch erfindungsgemäße Polymerabmischungen herstellen lassen, die zwar ausschließlich weniger reaktive ethoxysilanterminierte Polymere (A) enthalten, bei denen R$^2$ einen Ethylrest bedeuten, aber dennoch gegenüber Feuchtigkeit so reaktiv sind, daß sie auch ohne Zinnkatalysator mit hinreichend hoher Geschwindigkeit aushärten. So sind auch mit ethoxysilanterminierten Polymeren (A) zinnfreie Systeme mit Klebfreizeiten von unter 10 Minuten möglich. Derartige erfindungsgemäße Polymerabmischungen, die ausschließlich ethoxysilanterminierte Polymere (A) enthalten, besitzen den Vorteil, daß sie beim Härten lediglich Ethanol als Spaltprodukt freisetzen. Sie stellen eine bevorzugte Ausführungsform dieser Erfindung dar.

Die erfindungsgemäßen Polymerabmischungen können als weitere Komponenten an sich bekannte Hilfsstoffe, wie Füllstoffe, Wasserfänger, Reaktivverdünner, Haftvermittler, Weichmacher, Thixotropiermittel, Lichtschutzmittel, Fungizide, Flammschutzmittel, Pigmente etc. enthalten, wie sie für den Einsatz in sämtlichen herkömmlichen alkoxyvernetzenden einkomponentigen Massen bekannt sind. Zur Erzeugung der jeweils gewünschten Eigenschaftsprofile sowohl der unvernetzten Polymerabmischungen als auch der ausgehärteten Massen sind derartige Zusätze in der Regel unverzichtbar.

Für die erfindungsgemäßen Polymerabmischungen existieren zahllose verschiedene Anwendungen im Bereich der Kleb-, Dicht- und Fugendichtstoffe, Oberflächenbeschichtungen sowie auch bei der Herstellung von Formteilen.

Dabei sind sie für zahllose unterschiedliche Untergründe wie z.B. mineralische Untergründe, Metalle, Kunststoffe, Glas, Keramik etc. geeignet.

Die erfindungsgemäßen Polymerabmischungen können dabei sowohl in reiner Form als auch in Form von Lösungen oder Dispersionen zum Einsatz kommen.

Alle vorstehenden Symbole der vorstehenden Formeln weisen ihre Bedeutungen jeweils unabhängig voneinander auf. In allen Formeln ist das Siliciumatom vierwertig.

Die folgenden Beispiele dienen der Erläuterung der Erfindung ohne diese zu beschränken. Soweit nicht anders angegeben sind alle Mengen- und Prozentangaben auf das Gewicht bezogen, alle Drücke 0,10 MPa (abs.) und alle Temperaturen 20°C.

Als Maß für die Reaktivitäten der erfindungsgemäßen Polymerabmischungen - bzw. für die Reaktivitäten der nicht erfindungsgemäßen Polymerabmischungen in den Vergleichsbeispielen - sind jeweils die Klebfreizeiten angegeben. Die Klebfreizeiten sind hier besser geeignet als die Zeitspannen bis zu einer vollständigen Durchhärtung, da letztere nicht nur von der Reaktivität der erfindungsgemäßen Polymerabmischungen abhängen, sondern auch von der Wasserdampfdurchlässigkeit der ganz oder teilweise ausgehärteten Oberflächenschichten. Des weiteren sind die Klebfreizeiten mit höherer Genauigkeit bestimmbar.

Unter Klebfreizeit ist dabei diejenige Zeitspanne zu verstehen, die nach dem Ausbringen des Polymers an die Luft vergeht, bis die Polymeroberfläche soweit gehärtet ist, daß nach einer Berührung dieser Oberfläche mit einem Laborspatel weder Polymermasse am Spatel haften bleibt, noch eine Fadenbildung auftritt.

**Beispiel 1:**

Herstellung von Isocyanatomethyl-trimethoxysilan:

Ausgehend von Chlormethyl-trimethoxysilan wird Methylcarbamatomethyl-trimethoxysilan gemäß bekannter Verfahren (US 3,494,951) synthetisiert.

Dieses wird in ein Quarz-Pyrolyserohr, das mit Quarzwolle gefüllt ist, im Argon-Gasstrom eingepumpt. Die Temperatur im Pyrolyserohr beträgt zwischen 420 und 470 °C. Das Rohprodukt wird am Ende der beheizten Strecke mit Hilfe eines Kühlers auskondensiert und gesammelt. Die farblose Flüssigkeit wird durch Destillation unter reduziertem Druck gereinigt. Über Kopf geht bei ca. 88-90 °C (82 mbar) das gewünschte Produkt in über 99 %-iger Reinlieit über, während im Sumpf das nicht umgesetzte Carbamat reisoliert werden kann. Dieses wird der Pyrolyse direkt wieder zugeführt.

Ausgehend von 56,9 g (273 mmol) Methylcarbamatomethyl-trimethoxysilan werden so 33,9 g (191 mmol) des gewünschten Produkts Isocyanatomethyl-trimethoxysilan in einer Reinheit > 97 % enthalten. Dies entspricht einer Ausbeute von 70 % d. Th.

Nach dem analogen Verfahren werden die weiterhin beschriebenen Silane Isocyanatomethyl-methyldimethoxysilan, Isocyanatomethyl-triethoxysilan und Isocyanatomethyl-methyldiethoxysilan hergestellt.

**Beispiel 2:**

28,6 g (110 mmol) eines verzweigten Polypropylenglycerins mit der mittleren Molmasse von 260 g/mol und 8,1 g eines Polypropylenglycerins der mittleren Molmasse von 1500 g/mol werden vorgelegt und 1h bei 100 °C im Vakuum entwässert. Anschließend wird auf ca. 50 °C abgekühlt und bei dieser Temperatur werden unter Stickstoff 10,1 g (57,7 mmol) Toluol-2,4-diisocyanat (TDI) zugegen. Die Temperatur sollte dabei nicht auf über 80 °C steigen. Nach Beendigung der Zugabe rührt man für weitere 15 min bei dieser Temperatur. Zu dieser Mischung werden bei 50 °C unter Stickstoffatmosphäre 44,3 g (250 mmol) Isocyanatomethyl-trimethoxysilan gegeben, wobei die Temperatur unter 60 °C bleiben sollte. Anschließend rührt man für 60 min bei 80 °C bis mittels IR-Spektroskopie keine Isocyanatgruppen mehr nachweisbar sind. Man erhält ein klares, durchsichtiges Polymer mit einer Viskosität von 17 Pas bei 50°C.

Das erhaltene Polymer wird mit 2 g Aminopropyltrimethoxysilan als Katalysator vermischt. Nach dem darauffolgenden Ausbringen der Mischung beträgt die Klebfreizeit an der Luft etwa 1,5 min (23 °C, 50 % rh).

**Beispiel 3**

500 g (33,3 mmol) α,ω-Hydroxypropylpolydimethylsiloxan mit einem mittleren Molekulargewicht von 15 000 g/mol werden vorgelegt und 1h bei 100 °C im Vakuum entwässert. Nach Abkühlung auf 30 - 35 °C werden 13,0 g (73,3 mmol) Isocyanatomethyl-trimethoxysilan zugegeben und weiter 30 min. gerührt bis sich IR-spektroskopisch keine Isocyanatgruppen mehr nachweisen lassen. Man erhält ein klares, durchsichtiges Polymer mit einer Viskosität von 9,5 Pas bei 20°C.

Der Zusatz eines weiteren Härtungskatalysators ist nicht erforderlich. Nach dem Ausbringen der Mischung beträgt die Klebfreizeit an der Luft etwa 1 min (23 °C, 50 % rh).

**Beispiel 4**

Ein nach Beispiel 3 hergestelltes silanterminiertes Polymer wird in einem Laborplanetenmischer bei ca. 25 °C mit 230 g eines trimethylsilylterminierten Polydimethylsiloxans mit einer Viskosität von 100 Pas, 16,7 g 3-(2-Aminoethyl)-aminopropyl-trimethoxysilan, 16,7 g Vinyltrimethoxysilan und 85 g einer hydrophilen pyrogenen Kieselsäure versetzt und innerhalb 0,5 h zu einer standfesten Paste verarbeitet.

Der Zusatz eines weiteren Härtungskatalysators ist nicht erforderlich. Nach dem Ausbringen der Mischung beträgt die Klebfreizeit an der Luft etwa 7 min (23 °C, 50 % rh)

**Beispiel 5**

400 g (50,0 mmol)eines Polypropylenglykols mit einem mittleren Molekulargewicht von 8000 g/mol werden vorgelegt, 1h bei 100 °C im Vakuum entwässert und mit 6,3 g (28 mmol) Isophorondiisocyanat bei 100 °C innerhalb von 60 min. polymerisiert. Das erhaltene OH-terminierte Polyurethanpräpolymer wird danach auf 60 °C abgekühlt und mit 9,9 g (56 mmol) Isocyanatomethyl-trimethoxysilan versetzt und 60 min gerührt, bis im IR-Spektrum keine Isocyanatbande mehr vorhanden ist. Man erhält ein klares, durchsichtiges Polymer mit einer Viskosität von 85 Pas bei 20°C.

Der Zusatz eines weiteren Härtungskatalysators ist nicht erforderlich. Nach dem Ausbringen der Mischung beträgt die Klebfreizeit an der Luft etwa 3,5 min (23 °C, 50 % rh).

**Beispiel 6**

Ein nach Beispiel 5 hergestelltes silanterminiertes Polymer wird in einem Laborplanetenmischer bei ca. 25 °C mit 155 g Diisoundecylphthalat, 21,0 g 3-(2-Aminoethyl)-aminopropyl-trimethoxysilan, 21,0 g Vinyltrimethoxysilan und 435 g gefällter und getrockneter Kreide (vorher getrocknet, Wassergehalt < 50 ppm) versetzt und zu einer standfesten Paste verarbeitet.

Der Zusatz eines weiteren Härtungskatalysators ist nicht erforderlich. Nach dem Ausbringen der Mischung beträgt die Klebfreizeit an der Luft etwa 15 min (23 °C, 50 % rh).

**Beispiel 7**

400 g (50,0 mmol) eines Polypropylenglykols mit einem mittleren Molekulargewicht von 8000 g/mol werden vorgelegt, 1h bei 100 °C im Vakuum entwässert und mit 6,3 g (28 mmol) Isophorondiisocyanat bei 100 °C innerhalb von 60 min. polymerisiert. Das erhaltene OH-terminierte Polyurethanprepolymer wird anschließend auf 60 °C abgekühlt und mit 12,3 g (56 mmol) Isocyanatomethyl-triethoxysilan versetzt und 60 min gerührt, bis im IR-Spektrum keine Isocyanatbande mehr zu sehen, ist. Man erhält ein klares, durchsichtiges Polymer mit einer Viskosität von 80 Pas bei 20°C.

Der Zusatz eines weiteren Härtungskatalysators ist nicht erforderlich. Nach dem Ausbringen der Mischung beträgt die Klebfreizeit an der Luft etwa 6,5 min (23 °C, 50 % rh).

**Beispiel 8**

400 g (50,0 mmol)eines Polypropylenglykols mit einem mittleren Molekulargewicht von 8000 g/mol werden vorgelegt, 1h bei 100 °C im Vakuum entwässert und mit 6,3 g (28 mmol) Isophoron-diisocyanat bei 100 °C innerhalb von 60 min. polymerisiert. Das erhaltene OH-terminierte Polyurethanprepolymer wird anschließend auf 60 °C abgekühlt und mit 9,0 g (56 mmol) Isocyanatomethyl-methyldimethoxysilan versetzt und 60 min gerührt, bis im IR-Spektrum keine Isocyanatbande mehr zu sehen ist. Man erhält ein klares, durchsichtiges Polymer mit einer Viskosität von 77 Pas bei 20°C.

50 g des erhaltenen Polymers werden mit 2 g Phenylaminomethyl-trimethoxysilan als Katalysator vermischt. Nach dem darauffolgenden Ausbringen der Mischung beträgt die Klebfreizeit an der Luft etwa 2,5 min (23 °C, 50 % rh).

**Beispiel 9**

400 g (50,0 mmol)eines Polypropylenglykols mit einem mittleren Molekulargewicht von 8000 g/mol werden vorgelegt, 1h bei 100 °C im Vakuum entwässert und mit 6,3 g (28 mmol) Isophorondiisocyanat bei 100 °C innerhalb von 60 min. polymerisiert. Das erhaltene OH-terminierte Polyurethanpräpolymer wird anschließend auf 60 °C abgekühlt und mit 10,6 g (56 mmol) Isocyanatomethyl-methyldiethoxysilan versetzt und 60 min gerührt, bis im IR-Spektrum keine Isocyanatbande mehr zu sehen ist. Man erhält ein klares, durchsichtiges Polymer mit einer Viskosität von 85 Pas bei 20°C.

50 g des erhaltenen Polymers werden mit 2 g Phenylaminomethyl-trimethoxysilan als Katalysator vermischt. Nach dem darauffolgenden Ausbringen der Mischung beträgt die Klebfreizeit an der Luft etwa 5,5 min (23 °C, 50 % rh).

**Vergleichsbeispiel**

Es wird vorgegangen wie in Beispiel 3. Jedoch werden 15,8 g (73,3 mmol) Isocyanatopropyl-trimethoxysilan - anstelle Isocyanatomethyl-trimethoxysilan - eingesetzt. Es wird ein klares, durchsichtiges Polymer erhalten, in dem sich IR-spektroskopisch keine Isocyanatgruppen mehr nachweisen lassen. Das Polymer besitzt eine Viskosität von 9,0 Pas bei 20°C.

Ohne Zusatz eines weiteren Härtungskatalysators beträgt die Klebfreizeit an der Luft mehrere Tage (23 °C, 50 % rh).

**Patentansprüche**

1. Polymerabmischungen, die alkoxysilanterminierte Polymere (A) mit Endgruppen der allgemeinen Formel (1)

$$-A-CH_2-SiR^1{}_a(OR^2)_{3-a} \qquad (1)$$

und gegebenenfalls Zinnkatalysatoren mit einem Zinngehalt von höchstens 100 ppm bezogen auf die Polymerabmischung enthalten, wobei

A eine zweibindige Bindegruppe -O-CO-NH-

$R^1$ einen gegebenenfalls halogensubstuierten Alkyl-, Cycloalkyl-, Alkenyl- oder Arylrest mit 1-10 Kohlenstoffatomen,

$R^2$ einen Alkylrest mit 1-6 Kohlenstoffatomen oder einen ω-Oxaalkyl-alkylrest mit insgesamt 2-10 Kohlenstoffatomen

a eine ganze Zahl von 0 bis 2 bedeuten,

wobei schäumbare Mischungen ausgenommen sind, welche isocyanatfreie, alkoxysilanterminierte Präpolymere, welche über Silanterminierungen der allgemeinen Formel [2],

$$-X-CO-Y-CH_2-SiR^\alpha{}_w(OR^\beta)_{3-w}$$

$$[2]$$

verfügen, in der

**X** und **Y** ein Sauerstoffatom, eine N-RY-Gruppe oder ein Schwefelatom,

$R^\alpha$ einen Alkyl-, Alkenyl- oder Arylrest mit 1-10 Kohlenstoffatomen,

$R^\beta$ einen Alkylrest mit 1-2 Kohlenstoffatomen oder einen ω-Oxaalkyl-alkylrest mit insgesamt 2-10 Kohlenstoffatomen,

$R^\gamma$ ein Wasserstoffatom, einen Alkyl-, Cycloalkyl-, Alkenyl- oder Arylrest mit 1-10 Kohlenstoffatomen oder eine $CH_2-SiR^\alpha{}_w(OR^\beta)_{3-w}$-Gruppe und,

w die Werte 0 oder 1 bedeuten, mit der Maßgabe, daß mindestens eine der beiden Gruppen X oder Y eine NH-Funktion darstellt, und

Treibmittel enthalten.

2. Polymerabmischungen nach Anspruch 1, welche frei von zinnhaltigen Katalysatoren sind.

3. Polymerabmischungen nach Anspruch 1 oder 2, welche frei von schwermetallhaltigem Katalysator sind.

4. Polymerabmischungen nach Anspruch 1 bis 3, bei denen die Reste $R^1$ Methyl-, Ethyl- oder Phenylgruppen sind.

5. Polymerabmischungen nach Anspruch 1 bis 4, bei denen die Reste $R^2$ Methyl- oder Ethylgruppen sind.

**6.** Polymerabmischungen nach Anspruch 1 bis 5, bei denen Polymer (A) ein Umsetzungsprodukt von Silan der allgemeinen Formel (5)

$$OCN\text{-}CH_2\text{-}SiR^1{}_a(OR^2)_{3-a} \qquad (5)$$

wobei $R^1$, $R^2$ und a die in Anspruch 1 angegebenen Bedeutungen besitzen,
mit einem isocyanatreaktiven Präpolymer (A1) ist.

**7.** Polymerabmischungen nach Anspruch 1 bis 6, welche organische Aminoverbindungen als basische Katalysatoren enthalten.

**8.** Polymerabmischungen nach Anspruch 7, welche als Katalysatoren Verbindungen der allgemeinen Formel (7)

$$Z\text{-}R^4\text{-}SiR^1{}_a(OR^2)_{3-a} \qquad (7)$$

aufweisen, wobei

Z     eine $NHR^3$-Gruppe und
$R^3$   Wasserstoff, einen gegebenenfalls halogensubstuierten cyclischen, linearen oder verzweigten $C_1$ bis $C_{18}$-Alkyl- oder Alkenylrest oder eine $C_6$ bis $C_{18}$ Arylrest und
$R^4$   einen verzweigten oder unverzweigten Kohlenwasserstoffrest mit 1-10 Kohlenstoffatomen gegebenenfalls unterbrochen von Sauerstoff oder $N(R^3)$-Gruppen bedeuten und $R^1$, $R^2$ und a die in Anspruch 1 angegebenen Bedeutungen besitzen.

**9.** Verwendung der Polymerabmischungen nach Anspruch 1 bis 8 als Kleb-, Dicht- oder Fugendichtstoffe, zur Oberflächenbeschichtung oder zur Herstellung von Formteilen.

**Claims**

**1.** Polymer blends comprising alkoxysilane-terminated polymers (A) having end groups of the general formula (1)

$$-A\text{-}CH_2\text{-}SiR^1{}_a(OR^2)_{3-a} \qquad (1)$$

and, if desired, tin catalysts having a tin content of not more than 100 ppm, based on the polymer blend, where

A                          is a divalent linker group -O-CO-NH,

$R^1$                  is an optionally halogen-substituted alkyl, cycloalkyl, alkenyl or aryl radical having 1-10 carbon atoms,
$R^2$                  is an alkyl radical having 1-6 carbon atoms or an $\overline{\omega}$-oxaalkyl-alkyl radical having in total 2-10 carbon atoms, and
a                      is an integer from 0 to 2, with the exception of foamable mixtures comprising isocyanate-free, alkoxysilane-terminated pre-polymers having silane terminations of the general formula [2],

$$-X\text{-}CO\text{-}Y\text{-}CH_2\text{-}SiR^\alpha{}_w(OR^\beta)_{3-w}$$

$$[2]$$

in which
X and Y         are an oxygen atom, an N-R$\gamma$ group or a sulphur atom,
$R^\alpha$          is an alkyl, alkenyl or aryl radical having 1-10 carbon atoms,
$R^\beta$           is an alkyl radical having 1-2 carbon atoms or an $\overline{\omega}$-oxaalkyl-alkyl radical having in total 2-10 carbon atoms,
$R\gamma$           is a hydrogen atom, an alkyl, cycloalkyl, alkenyl or aryl radical having 1-10 carbon atoms or a $CH_2$-SiR$^\alpha{}_w(OR^\beta)_{3-w}$ group, and
w                   denotes the value 0 or 1, with the proviso that at least one of the two groups, X or Y, is an NH function, and propellants.

**2.** Polymer blends according to Claim 1, which are free from tin catalysts.

**3.** Polymer blends according to Claim 1 or 2, which are free from heavy metal catalyst.

**4.** Polymer blends according to Claim 1 to 3, in which the radicals $R^1$ are methyl, ethyl or phenyl groups.

**5.** Polymer blends according to Claim 1 to 4, in which the radicals $R^2$ are methyl or ethyl groups.

**6.** Polymer blends according to Claim 1 to 5, wherein polymer (A) is a reaction product of silane of the general formula (5)

$$OCN\text{-}CH_2\text{-}SiR^1_a(OR^2)_{3-a} \qquad (5)$$

where $R^1$, $R^2$, and a are as defined in claim 1 with an isocyanate-reactive prepolymer (A1).

**7.** Polymer blends according to Claim 1 to 6, comprising organic amino compounds as basic catalysts.

**8.** Polymer blends according to Claim 7, comprising as catalysts compounds of the general formula (7)

$$Z\text{-}R^4\text{-}SiR^1_a(OR^2)_{3-a} \qquad (7)$$

where

Z is an $NHR^3$ group and

$R^3$ is hydrogen, an optionally halogen-substituted cyclic, linear or branched $C_1$ to $C_{18}$ alkyl or alkenyl radical or a $C_6$ to $C_{18}$ aryl radical, and

$R^4$ is a branched or unbranched hydrocarbon radical having 1-10 carbon atoms optionally interrupted by oxygen or $N(R^3)$ groups, and $R^1$, $R^2$ and a are as defined in Claim 1.

**9.** Use of the polymer blend is according to Claim 1 to 8 as adhesives or sealants, including joint sealants, for surface coating or for producing mouldings.

**Revendications**

**1.** Mélanges de polymères, qui contiennent des polymères (A) à terminaison alcoxysilane, comportant des groupes en bout de chaîne de formule générale (1)

$$-A\text{-}CH_2\text{-}SiR^1_a(OR^2)_{3-a} \qquad (1)$$

et éventuellement des catalyseurs contenant de l'étain, ayant une teneur en étain d'au maximum 100 ppm, par rapport au mélange de polymères, formule dans laquelle

A représente un groupe de liaison -O-CO-NH- à deux liaisons,

$R^1$ représente un radical alkyle, cycloalkyle, alcényle ou aryle ayant de 1 à 10 atomes de carbone, éventuellement substitué par halogène,

$R^2$ représente un radical alkyle ayant de 1 à 6 atomes de carbone ou un radical ω-oxaalkyl-alkyle ayant au total 2-10 atomes de carbone et

a représente un nombre entier allant de 0 à 2,

à l'exclusion des mélanges susceptibles d'être transformés en mousses qui contiennent des prépolymères à terminaison alcoxysilane et exempts d'isocyanate, qui sont dotés de terminaisons silane de formule générale (2)

$$-X\text{-}CO\text{-}Y\text{-}CH_2\text{-}SiR^\alpha_w(OR^\beta)_{3-w}$$

$$(2)$$

dans laquelle

X et Y représentent un atome d'oxygène, un groupe $N\text{-}R^\gamma$- ou un atome de soufre,

$R^\alpha$ représente un radical alkyle, alcényle ou aryle ayant de 1 à 10 atomes de carbone,

$R^\beta$ représente un radical alkyle ayant 1-2 atomes de carbone ou un radical ω-oxaalkyl-alkyle ayant au total 2-10 atomes de carbone,

$R^\gamma$ représente un atome d'hydrogène, un radical alkyle, cycloalkyle, alcényle ou aryle ayant de 1 à 10 atomes de carbone ou un groupe $CH_2\text{-}SiR^\alpha_w(OR^\beta)_{3-w}$ et

w a la valeur 0 ou 1,

étant entendu qu'au moins l'un des deux groupes X et Y représente une fonction NH, et des agents d'expansion.

**2.** Mélanges de polymères selon la revendication 1, qui sont exempts de catalyseurs contenant de l'étain.

**3.** Mélanges de polymères selon la revendication 1 ou 2, qui sont exempts de catalyseur contenant des métaux lourds.

**4.** Mélanges de polymères selon l'une quelconque des revendications 1 à 3, dans lesquels les radicaux $R^1$ sont des groupes méthyle, éthyle ou phényle.

**5.** Mélanges de polymères selon l'une quelconque des revendications 1 à 4, dans lesquels les radicaux $R^2$ sont des groupes méthyle ou éthyle.

6. Mélanges de polymères selon l'une quelconque des revendications 1 à 5, dans lesquels le polymère (A) est un produit de réaction d'un silane de formule générale (5)

$$OCN\text{-}CH_2\text{-}SIR^1{}_a(OR^2)_{3-a} \qquad (5)$$

dans laquelle $R^1$, $R^2$ et a ont les significations données dans la revendication 1, avec un prépolymère (A1) réactif avec un isocyanate.

7. Mélanges de polymères selon l'une quelconque des revendications 1 à 6, qui contiennent en tant que catalyseurs basiques des composés aminés organiques.

8. Mélanges de polymères selon la revendication 7, qui comportent en tant que catalyseurs des composés de formule générale (7)

$$Z\text{-}R^4\text{-}SiR^1{}_a(OR^2)_{3-a} \qquad (7)$$

dans laquelle

| | |
|---|---|
| Z | représente un groupe $NHR^3$ et |
| $R^3$ | représente un atome d'hydrogène, un radical alkyle ou alcényle en $C_1$ à $C_{18}$ cyclique, linéaire ou ramifié, éventuellement substitué par halogène, ou un radical aryle en $C_6$ à $C_{18}$ et |
| $R^4$ | représente un radical hydrocarboné ramifié ou non ramifié, ayant de 1 à 10 atomes de carbone, éventuellement interrompu par des atomes d'oxygène ou des groupes $N(R^3)$ et |
| $R^1$, $R^2$ et a | ont les significations données dans la revendication 1. |

9. Utilisation des mélanges de polymères selon l'une quelconque des revendications 1 à 8, en tant que matières adhésives, d'étanchéité ou de garniture de joints, pour le revêtement de surfaces ou pour la fabrication de pièces moulées.